# EUROPEAN PATENT SPECIFICATION

(11) **EP 1 605 859 B1**
(45) Date of publication and mention of the grant of the patent: **11.11.2009**
(21) Application number: 04721093.5
(22) Date of filing: 17.03.2004
(51) Int. Cl.: A61C 7/14, A61C 7/04

(54) **METHOD FOR THE PLACEMENT OF ORTHODONTIC BRACKETS**
VERFAHREN ZUR PLAZIERUNG VON ORTHODONTISCHEN BRACKETS
PROCEDE POUR PLACER DES BRACKETS ORTHODONTIQUES

(30) Priority: 17.03.2003 US 455637 P
(43) Date of publication of application: 21.12.2005
(73) Proprietor: Ortho-Dontos B.V.B.A., 3680 Maaseik (BE)
(72) Inventor: Sampermans, Guido, 3680 Maaseik (BE)
(74) Representative: Van Malderen, Joëlle
(86) International application number: PCT/BE2004/000038
(87) International publication number: WO 2004/082509

(56) References cited:
- EP-A- 0 095 896
- US-A- 4 455 138
- US-A- 4 501 554
- US-A- 4 657 508
- US-A- 5 971 754

## Description

### Field of the invention

The present invention is related to a novel method for placing and positioning orthodontic brackets. The invention is further related to a clear transfer tray and a tool for use in said method

### State of the art

Correctly positioning orthodontic brackets has always been an important factor in a qualitative and efficient orthodontic treatment, and its importance has only grown with the introduction of the Straight Wire^{™} technique. In the past, best result were achieved by the best wire bending, but in the future the best results will be achieved by the best bracket positioning.

Until now, mostly direct techniques have been applied when placing orthodontic brackets. Using this technique, brackets are placed directly on the teeth. Correct positioning is based on the middle point of the long axis of the tooth crown, or on measuring instruments such as gauges, which allow to measure from the incisal or occlusal plane of the tooth. This system is prone to errors in the vertical, horizontal and axial directions.

Indirect bonding systems exist also, and include an extra step when positioning brackets on teeth. First, a model of the teeth is made in plaster or plastic. The brackets are placed on the model mostly based on reference lines, followed by the fabrication of a transfer tray or by a so-called "clear transfer tray", a plastic plate construed to the model using a vacuum (e.g. by using the Biostar apparatus).

The indirect technique has several advantages over the direct technique. A more accurate positioning of the brackets is possible because it is possible to verify the teeth from all perspectives. It is therefore possible to take special circumstances such as incisal or cuspid wear, the necessity for extra rotation, tip or torque. The orthodontist can use all his experience for correctly positioning the brackets, and does not have to consider discomfort for the patient, keeping the operation area dry, view-impediment by cheeks and lips, and movement of the brackets during the gelphase, thereby reducing the adhesive power of the brackets considerably. The brackets can be placed quicker, reducing the time for the orthodontist and the discomfort for the patient, with a better end result and client satisfaction.

There are however several disadvantages associated with the indirect techniques from the prior art. The transfer of the brackets from the model to the patient is cumbersome and a bad placement of the transfer tray leads to a bad positioning of all the brackets. Sometimes, brackets are lost on transfer, or released from the correct position when removing the tray. The technique is also very work-intensive: the placement on the model, hardening of the glue, fabrication of transfer tray, release of the brackets from the model and cleaning of the bracket basis take considerable lab time, which leads to higher costs. Further, the technique requires very high precision, and a small error can be magnified to serious defects.

### Aims of the invention

The present invention aims to provide a new indirect bracket placement technique which solves the problems associated with the indirect placement methods of the state of the art. In particular, a reduction of preparation costs and lab time is a primary aim of the present invention. In other words, it is an aim of the present invention to develop a more direct indirect bracket placement technique.

### Summary of the invention

The present invention is related to an indirect bracket placement method for correctly positioning brackets on a patient's teeth, comprising the steps of:
- Providing a model of the patients teeth,
- Providing a reference marking on said model indicating correct positioning of brackets,
- Manufacturing a transfer tray of the model, wherein said reference marking is visible on said transfer tray, and
- Providing holes at the exact bracket positions in said clear transfer tray, said holes allowing placement of brackets in the exact position.

The indirect bracket placement method of the present invention can be further characterised in that the holes provided in the clear transfer tray are of the dimensions of the bracket base. The gingival parts of the transfer tray can be removed to enable removal of the tray after placement.

Another aspect of the present invention concerns a tool for providing holes in a clear transfer tray, said tool comprising on a first side a reference for correct placement of said tool, and on a second side a cutting plate dimensioned as a bracket base, said first and second side co-operating to cut away from the clear transfer tray the form of the bracket base at the exact position.

The tool of the present invention can further comprise on the second side a reference for correct placement of said tool. Preferably, the reference is a cross. Advantageously, the tool is executed as a pair of nippers.

Another aspect of the present invention concerns a transfer tray for use in the indirect bracket placement method of the present invention, wherein said transfer tray is based on a model of a patient's teeth, characterised in that said transfer tray comprises perforations at the exact bracket positions, said perforations allowing placement of brackets in the exact position. In the transfer tray of the invention, the perforations preferably have the form of the bracket base. Advantageously, the gingival part above the perforations is removed to allow easy removal of the transfer tray after bracket placement.

### Short description of the drawings

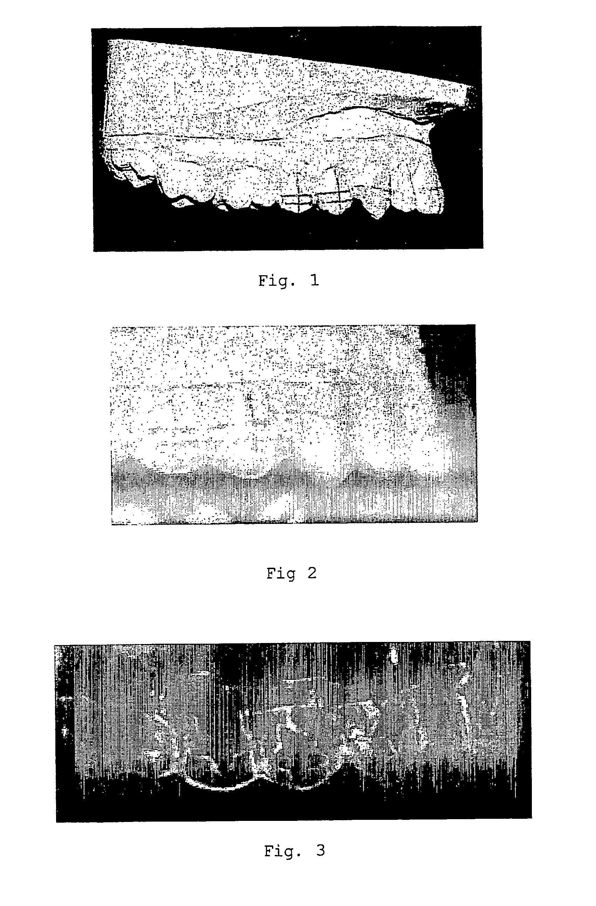

Fig. 1 represents the drawing of reference lines to the model.

Fig. 2 represents a clear transfer tray over the model.

Fig. 3 shows a clear transfer tray with stars cut out at exact positions.

Fig. 4 and 5 shows nippers particularly suited for practising the invention.

### Detailed description of the invention

In the present invention, a novel indirect placement method is disclosed.

The first step is the manufacture of a model of the patient's teeth, using any of the known impression techniques using alginate or silicone. On this model, reference lines are added with a pencil using the orthodontist's preferred technique. All techniques are possible, such as midpoint of the long axis of the crown, marginal height of premolars (Dr. Kalange), determination of vertical height using gauges,....

In an optional second step, the reference lines can be marked with crosses using e.g. plastic adhesive.

The next step comprises the manufacture of a transfer tray, using e.g. a vacuum apparatus such as the Biostar apparatus from Scheu. All other vacuum or pressure systems known can also be used. Several suitable polymer plates are suitable for this and are commercially available. Plate Duran 1.0 mm, Duran 1.5 mm, Copyplast 1.5 mm and Bioplast 1.0 mm give good results. Equivalent or comparing plates from other companies can also be used.

Clear impression materials that harden on a plaster model can be used, they should be hard enough to be form stable and cut-able, but flexible enough to provide a good fit (going over the undercuts) on the teeth of the patient.

The pencil markings are transferred to the transfer tray and are clearly visible from the outside. In case plastic adhesive crosses have been used, small recesses are created in the overlay. The overlay now has all the information needed for placing the brackets.

In contradiction to the prior art techniques, the brackets are now not mounted on the model. Instead, holes are made of the exact dimensions of the bracket base in the defined location on the overlay. The references on the overlay are used to determine the exact position of the brackets.

From the overlay tray, the gingival parts are cut away to enable removal of the tray after placement of the brackets. The removal of the gingival part is optional and not necessary in case the transfer material is flexible enough, or when the brackets do not have hooks. Evacuation spaces for excess bonding material can be provided. After verification of the tray dimensions in the patient's mouth, the tray is fitted and fixed e.g. by letting the patient bite on cotton rolls.

The next step comprises the etching of the teeth through the holes, followed by rinsing and drying. Self-etching primer manufactured by 3M, Espe or others can also be used. The brackets can now be placed exactly in the holes and fixed with the help of a polymerisation light as known in the art. Finally, the tray can be removed from the mouth in occlusal direction.

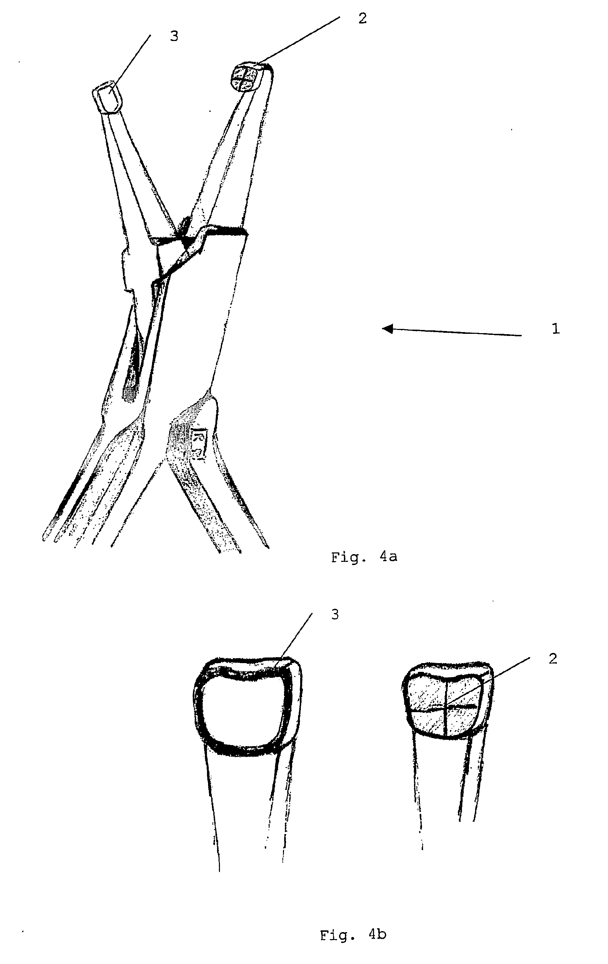

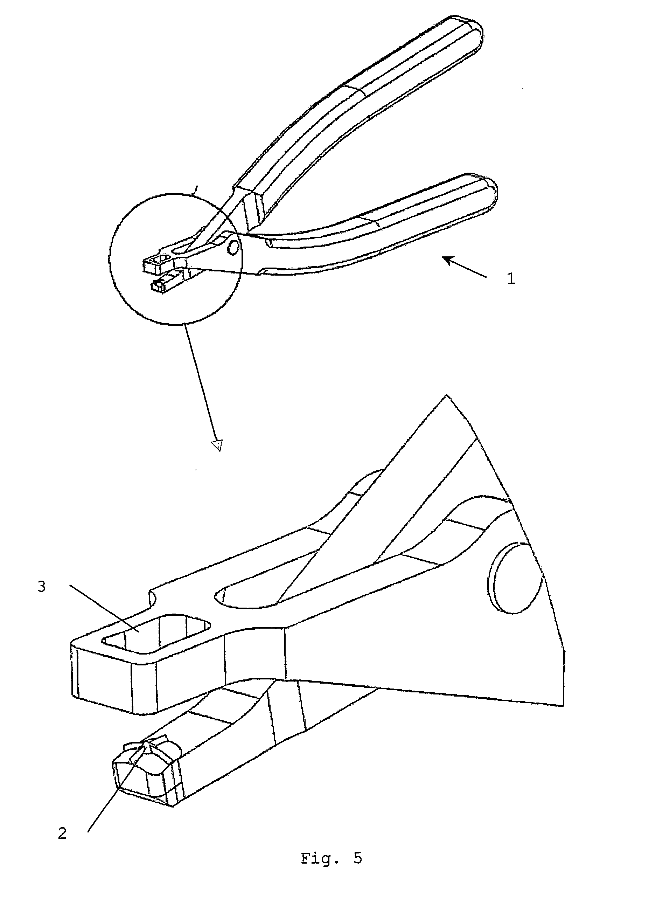

Different techniques are available for providing the holes in the overlay tray. Reference is made to figures 4 and 5. Specially designed nippers 1, have a reference cross (2) marked on one or preferably both sides. This side is the side that is placed on the inside of the tray, ensuring that the nipper's reference lines correspond exactly with the reference lines on the overlay tray. A more correct placement is realisable when both sides have a reference cross. In case plastic adhesive crosses are used to mark the position, the nippers can be provided with a similar cross form, which fits the recesses in the transfer tray formed by the plastic markers. The other side of the nippers comprises plates (3) with an opening corresponding to the bracket base, allowing intrusion of the first side (2) of the nippers 1. When applying pressure on the nippers when correctly positioned, they will form a hole with the required dimensions and position. Evacuation space for excess bonding material can be provided. Further, the overlay plate parts underlying the holes as cut are removed to enable removal of the tray after bracket placement.

Another method for providing the holes in the overlay tray can be high-pressure water cutting or laser cutting. A programmable apparatus can be provided. All bracket base forms can easily be stored in memory and the reference markings can be detected by the apparatus to cut the hole on the precise location indicated by the reference lines.

Further, digital model and digital set-up can be used for more precise bracket positioning measurements. Digital modelling is already used (Geodigm, Invisaline) and makes it possible to provide 3D digital models and make a virtual bracket set-up. The digital model can be marked as explained before, and used as a base for providing the overlay tray.

## Claims

1. An indirect bracket placement method for correctly positioning brackets on a patient's teeth, comprising the steps of:
• Providing a model of the patients teeth,
• Providing a reference marking (2) on said model indicating correct positioning of brackets,
• Manufacturing a transfer tray of the model, wherein said reference marking is visible on said transfer tray, and
• Providing holes at the exact bracket positions in said clear transfer tray, said holes allowing placement of brackets in the exact position.

2. The indirect bracket placement method as in claim 1, wherein the holes provided in the clear transfer tray are of the dimensions of the bracket base.

3. The indirect bracket placement method as in claim 1 or 2, wherein the gingival parts of the transfer tray are removed to enable removal of the tray after placement.

4. A tool (1) for providing holes in a clear transfer tray manufactured in accordance with the method of claim 1, said tool comprising on a first side a reference marking (2) for correct placement of said tool, and on a second side a cutting plate (3) dimensioned as an orthodontic bracket base, said first and second side co-operating to cut away from the clear transfer tray the form of the bracket base at the exact position.

5. The tool of claim 4, wherein the second side further comprises a reference for correct placement of said tool.

6. The tool of any of claims 4 or 5, wherein the reference is a cross.

7. The tool of any of the claims 4 to 6, wherein the tool is a pair of nippers.

8. A transfer tray for use in the indirect bracket placement method of claim 1, wherein said transfer tray is based on a model of a patient's teeth, **characterised in that** said transfer tray comprises perforations at the exact bracket positions, said perforations allowing placement of brackets in the exact position.

9. The transfer tray of claim 8, wherein the perforations have the form of the bracket base.

10. The transfer tray of claim 8 or 9, wherein the gingival part above the perforations is removed to allow easy removal of the transfer tray after bracket placement.

## Patentansprüche

1. Verfahren zum indirekten Einsetzen von Brackets, um Brackets auf den Zähnen eines Patienten richtig zu positionieren, umfassend folgende Schritte:
- Bereitstellen eines Modells der Zähne des Patienten,
- Bereitstellen einer Bezugsmarkierung (2) auf dem Modell, welche die richtige Positionierung von Brackets angibt,
- Herstellen eines Übertragungssockels, wobei die Bezugsmarkierung auf dem Übertragungssockel sichtbar ist, und
- Bereitstellen von Löchern in den genauen Bracketpositionen in dem durchsichtigen Übertragungssockel, wobei die Löcher das Einsetzen der Brackets in der genauen Position ermöglichen.

2. Verfahren zum indirekten Einsetzen von Brackets nach Anspruch 1, wobei die Löcher, die in dem durchsichtigen Übertragungssockel bereitgestellt werden, die Abmessungen der Bracketbasis haben.

3. Verfahren zum indirekten Einsetzen von Brackets nach Anspruch 1 oder 2, wobei die Zahnfleischteile des Übertragungssockels entfernt werden, um das Entfernen des Sockels nach dem Einsetzen zu ermöglichen.

4. Werkzeug (1) zum Bereitstellen von Löchern in einem durchsichtigen Übertragungssockel, der nach dem Verfahren nach Anspruch 1 hergestellt wird, wobei das Werkzeug auf einer ersten Seite eine Bezugsmarkierung (2) für das richtige Einsetzen des Werkzeugs und auf einer zweiten Seite eine Schneideplatte (3) umfasst, die als orthodontische Bracketbasis bemessen ist, wobei die erste und die zweite Seite zusammenwirken, um aus dem durchsichtigen Übertragungssockel die Form der Bracketbasis in der genauen Position weg zu schneiden.

5. Werkzeug nach Anspruch 4, wobei die zweite Seite ferner einen Bezugspunkt für das richtige Einsetzen des Werkzeugs umfasst.

6. Werkzeug nach einem der Ansprüche 4 oder 5, wobei der Bezugspunkt ein Kreuz ist.

7. Werkzeug nach einem der Ansprüche 4 bis 6, wobei das Werkzeug eine Zange ist.

8. Übertragungssockel zur Verwendung in dem Verfahren zum indirekten Einsetzen von Brackets nach Anspruch 1, wobei der Übertragungssockel auf einem Modell der Zähne eines Patienten basiert, **dadurch gekennzeichnet, dass** der Übertragungssockel Perforierungen an den genauen Bracketpositionen umfasst, wobei die Perforierungen das Einsetzen von Brackets in der genauen Position ermöglichen.

9. Übertragungssockel nach Anspruch 8, wobei die Perforierungen die Form der Bracketbasis haben.

10. Übertragungssockel nach Anspruch 8 oder 9, wobei der Zahnfleischteil oberhalb der Perforierungen entfernt wird, um ein müheloses Entfernen des Übertragungssockels nach dem Einsetzen der Brackets zu ermöglichen.

## Revendications

1. Procédé de mise en place indirecte de fixations orthodontiques pour positionner correctement des fixations orthodontiques sur les dents d'un patient, comprenant les étapes consistant à :
- fournirun modèle des dents du patient,
- fournirun marquage de référence (2) sur ledit modèle indiquant le positionnement correct des fixations orthodontiques,
- fabriquer un support de transfert du modèle, dans lequel ledit marquage de référence est visible sur ledit support de transfert, et
- fournirdes trous aux positions exactes des fixations orthodontiques dans ledit support de transfert transparent, lesdits trous permettant la mise en place des fixations orthodontiques dans la position exacte.

2. Procédé de mise en place indirecte de fixations orthodontiques selon la revendication 1, dans lequel les trous prévus dans le support de transfert transparent ont les dimensions de la base de fixation orthodontique.

3. Procédé de mise en place indirecte de fixations orthodontiques selon la revendication 1 ou 2, dans lequel les parties gingivales du support de transfert sont retirées pour permettre le retrait du support après la mise en place.

4. Outil (1) pour fournirdes trous dans un support de transfert transparent fabriqué selon le procédé selon la revendication 1, ledit outil comprenant sur un premier côté un marquage de référence (2) pour une mise en place correcte dudit outil, et sur un deuxième côté une plaque de coupe (3) dimensionnée comme une base de fixation orthodontique, le premier et le deuxième côté coopérant pour découper du support de transfert transparent la forme de la base de fixation orthodontique dans la position exacte.

5. Outil selon la revendication 4, dans lequel le deuxième côté comprend en outre une référence pour une mise en place correcte dudit outil.

6. Outil selon l'une quelconque des revendications 4 ou 5, dans lequel la référence est une croix.

7. Outil selon l'une quelconque des revendications 4 à 6, dans lequel l'outil est une paire de tenailles.

8. Support de transfert pour une utilisation dans le procédé de mise en place indirecte de fixations orthodontiques selon la revendication 1, dans lequel ledit support de transfert est basé sur un modèle des dents d'un patient, **caractérisé en ce que** ledit support de transfert comprend des perforations dans les positions exactes des fixations orthodontiques, lesdites perforations permettant la mise en place des fixations orthodontiques dans la position exacte.

9. Support de transfert selon la revendication 8, dans lequel les perforations ont la forme de la base de fixation orthodontique.

10. Support de transfert selon la revendication 8 ou 9, dans lequel la partie gingivale au-dessus des perforations est retirée pour permettre un retrait aisé du support de transfert après la mise en place de la fixation orthodontique.
